# EUROPEAN PATENT SPECIFICATION

(11) **EP 1 832 210 B1**
(45) Date of publication and mention of the grant of the patent: **14.12.2011**
(21) Application number: 07004562.0
(22) Date of filing: 06.03.2007
(51) Int. Cl.: A47J 31/40

(54) **Detector device, particularly for beverage vending machines, and beverage vending machine provided with a detector device**
Detektionsvorrichtung, insbesondere für Getränkeautomaten, und mit einer Detektionsvorrichtung ausgestatteter Getränkeautomat
Dispositif détecteur, en particulier pour distributeurs de boissons et distributeur de boissons doté d'un dispositif détecteur

(30) Priority: 06.03.2006 IT MI20060395
(43) Date of publication of application: 12.09.2007
(73) Proprietor: Bianchi Vending Group S.P.A., 24049 Zingonia di Verdellino BG (IT)
(72) Inventor: Vergani, Tarcisio, 24040 Boltiere BG (IT)
(74) Representative: Forattini, Amelia

(56) References cited:
- EP-A- 1 491 121
- EP-A- 1 526 485
- WO-A-2004/081498
- DE-A1- 3 309 612
- US-A- 4 665 808

## Description

The present invention relates to a detector device, particularly for beverage vending machines.

More particularly, the present invention relates to a device which, inserted within a vending machine, is capable of detecting the presence, the reserve or the lack of a food product in the form of powder, grains and liquid used to produce hot and cold beverages.

As it is known, hot and/or cold beverage vending machines include devices which are capable of mixing and dispensing the beverage starting from one or more products stored within the vending machine itself.

The food products are contained in the vending machine in various conditions, as powder, grains or in liquid form, and are contained within boxes or trays suitable for storing and dispensing these ingredients.

It is of course necessary to assiduously and regularly check that the products are present in the vending machine in a sufficient quantity to ensure adequate dispensing of the beverage.

Resupply interventions are planned according to the estimated degree of consumption of the products, but of course these interventions may occur too soon, when the product or products are not yet completely used up, or when the products have been used up for some time, thus depriving consumers of the corresponding beverage or beverages.

There are also cases in which the lack of one of the ingredients of the beverage is not detected and the machine dispenses incomplete beverages.

US-4,665,808 discloses a coffee percolator provided with means for sensing the filling level of coffee meal therein. The sensing means comprises an electro-optical sensor secured to the outer side of the reservoir which is provide with optical transparent portions. Such device requires a special container, provided with transparent portions. The optical sensor system disclosed in US-4,665,808 requires a special construction of the product reservoir and is rather complicated and expensive.

WO2004/081498 discloses a level indicator, for liquid gas containers, constituted by two thermistors inserted Into a case which is located on the external surface of the gas container.

The aim of the present invention is to provide a detector device which overcomes the drawbacks of the cited prior art.

An object of the invention is to provide a detector device which can be applied to a vending machine in order to detect the presence and/or level of a product.

A further object of the invention is to provide a detector device which can be adapted to the vending machines that are already commercially available.

A further object of the invention is to provide a device which is capable of detecting the presence of the food product in any form, be it powder, grains, liquids, et cetera.

This aim and these and other objects, which will become better apparent hereinafter, are achieved by a detector device as defined in claim 1, particularly for beverage vending machines, characterized in that it comprises a sensor bar which acts as a supporting plate for one or more sensors, that are adapted to detect the presence or lack of a food product within a container and are adapted to send a message to an operator.

Further characteristics and advantages of the invention will become better apparent from the following detailed description of preferred but not exclusive embodiments thereof, illustrated by way of non-limiting example in the accompanying drawings, wherein:

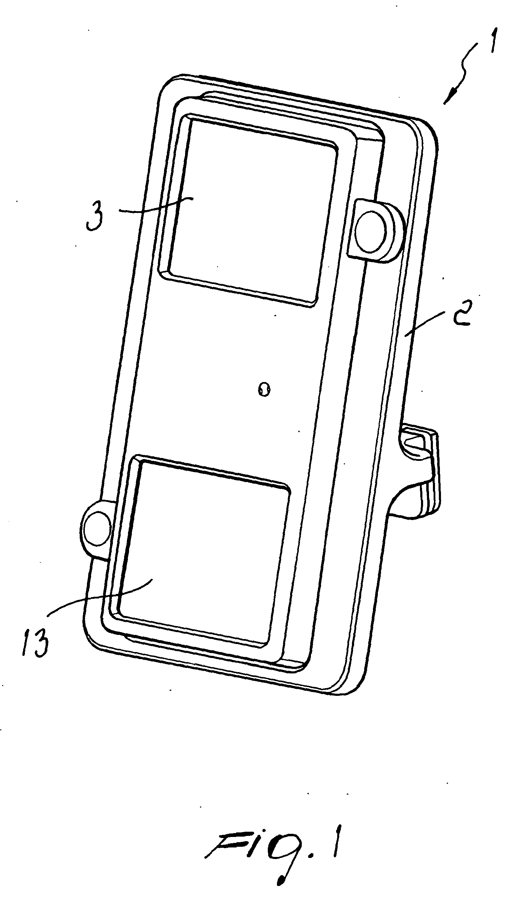

Figure 1 is a schematic perspective view of a detector device according to the present invention;
Figure 2 is a partial sectional front view of a soluble beverage vending machine provided with the detector device according to the present invention;
Figure 3 is a partial side view of the vending machine of Figure 2.

With reference to the cited figures, a device according to the invention, generally designated by the reference numeral 1, has a sensor plate 2, which acts as a supporting plate for one or more sensors 3 and 13.

The device 1 is therefore modular and can be adapted to the various mechanisms of vending machines.

The sensor plate 2 is applied externally with respect to the boxes or trays that constitute the product containers of the machine, at a distance comprised preferably between 1 and 10 mm.

According to the invention, the sensor device has at least two sensing locations.

The sensing locations are constituted by two sensors 3 and 13 having different sensitivity.

The upper sensor 3 has a lower sensitivity than the lower sensor 13.

Such arrangement provides an accurate reading of the contents of the food boxes by comparing the separate readings of the upper and lower sensors.

Preferably the device comprises a trimmer for adjusting the current feeding the sensors in order to make the device adjustable for all types of mechanical structures of the vending machines. Namely the device should be adjusted according to the different types of plastics used in manufacturing the food boxes and containers of the vending machines.

The above arrangement allows the sensor device to discriminate between plastics, which constitute the machine body, and the products that may be in form of powder, liquid or grains, such as sugar.

The sensors 3, 13 for detecting the product can be of various types; in particular, they can use the following technologies:
- capacitive;
- piezoelectric;
- magnetic;
- ultrasonic.

The operating principle is substantially identical for all the technologies listed above.

When the product is present in a quantity which can be determined within the operating range of the sensing part, the sensor 3 detects its presence and warns the electronic board that the product required for dispensing is present in the container.

The sensor can work in various situations and in variable conditions. The following applications are possible:
- detection of the presence of the product (in powder, grains, liquid);
- detection of the reserve of product;
- detection of the lack of product;
- detection of the reserve of product and, in combination with the management of software decremental counters, prevention of its lack;
- detection of the presence of product and, in combination with a telemetry system, sending of this information to a control center and/or to the operator assigned to refilling;
- detection of the reserve of product and, in combination with a telemetry system, sending of this information to a control center and/or to the operator assigned to refilling;
- detection of the lack of product and, in combination with a telemetry system, sending of this information to a control center and/or to the operator assigned to refilling;
- detection of the reserve of product and, in combination with the management of software decremental counters and with a telemetry system, prevention of the lack of the product by notifying the control center and/or the operator assigned to refilling that within a certain time it will be necessary to refill the ingredient.

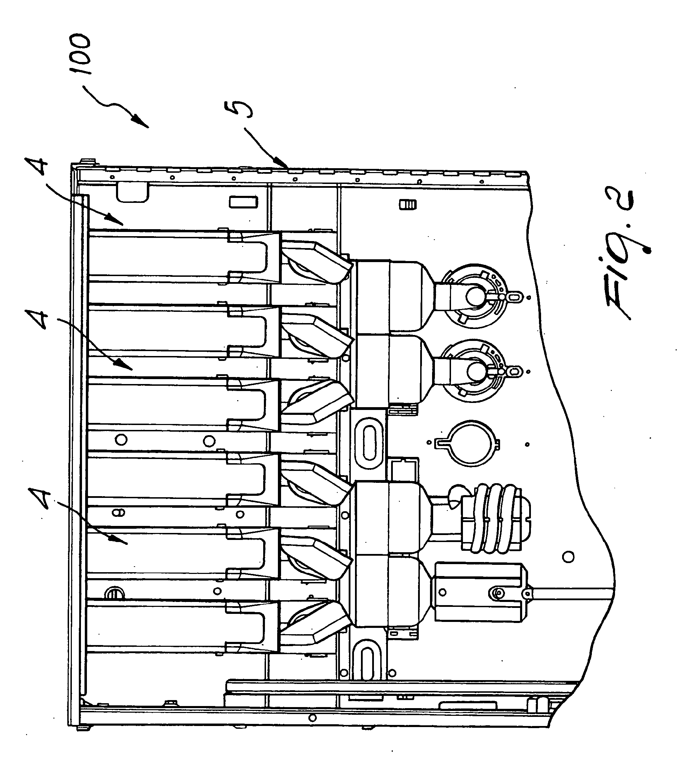

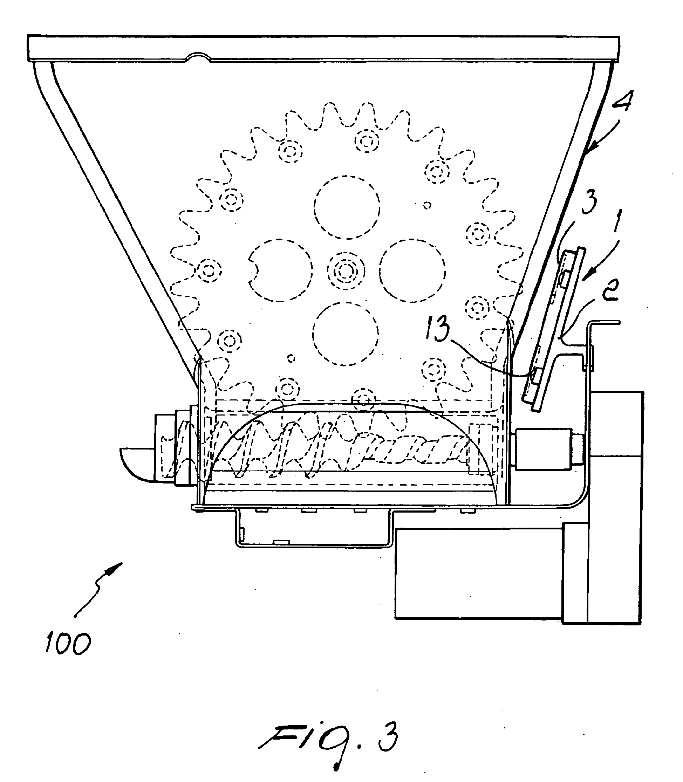

Figures 2 and 3 illustrate an example of application of the detector device according to the present invention.

Consider, by way of example, a soluble beverage vending machine, generally designated by the reference numeral 100.

The vending machine comprises a number of boxes, designated by the reference numeral 4, that contain food product in powder form.

The sensor plate 2 is associated with a box support 5 so that the sensors can detect the presence of the food powder inserted in the containers and used as an ingredient for dispensing hot or cold beverages.

The sensors are directed toward the boxes and are arranged at the selected reserve level, as shown schematically in Figure 3.

The distance of the sensors from the boxes is variable depending on the shapes of the boxes, support plate, etc.

The level of the sensors is variable depending on the type of product introduced and on the management requirements of the storage system.

The sensors 3, 13 are functionally connected to an electronic operating board, which is provided with a telemetry module which allows complete automation and independence of the device.

The countdown values for each box are entered in the programming menu and will be enabled when the sensor detects the reserve of product.

Once the vending machine has been filled with the required food powders, and once the machine has been installed at its operating location, the sensors start to operate, checking constantly for the presence of the food powder contained in the individual boxes.

As soon as the sensors detect the lack of product in powder form contained in the box 4, the telemetry module sends information to the control center and/or to the operator assigned to box refilling.

The electronic board starts to count down the value, at each requested selection. The value is set previously during programming.

Those two procedures allow to determine that the box 4 has entered the reserve condition and allow to notify, by means of the telemetry, that it is possible to perform refilling no later than the selections set as countdown during programming.

As soon as the decremental counter has reached zero, the electronic board is capable of notifying the end user, i.e., the consumer who presses the beverage selection button, that the chosen product is finished, avoiding the supply of a beverage which lacks one or more ingredients.

In practice it has been found that the invention achieves the intended aim and objects, a device having been provided which is capable of checking, in various conditions, for the presence, reserve and lack of food product in the form of powder, grains and liquid contained within boxes or trays suitable for storing and dispensing these ingredients.

The device according to the invention allows to determine when a food product contained in the vending machine is ending, i.e. a reserve situation, and is therefore capable of notifying a control center by means of remote link, and allows to prevent the user from receiving a beverage which lacks the required product if the product is finished.

By means of the device according to the invention, the organizations in charge of automatic vending machines can optimize the work schedules of operators assigned to refilling, performing refilling interventions only when actually needed.

The sensor device according to the present invention may be applied to existing vending machines without modifying the basic structure, namely the product containers or reservoirs.

This application claims the priority of Italian Patent Application No. Ml2006A000395, filed on 6 March 2006, the subject matter of which is incorporated herein by reference.

The device according to the invention is susceptible of numerous modifications and variations, within the scope of the appended claims. All the details may be replaced with technically equivalent elements.

The materials used, as well as the dimensions, may of course be any according to requirements and to the state of the art.

## Claims

1. A detector device, particularly for beverage vending machines, comprising at least one product container (4), a sensor plate (2) supporting sensor means (3, 13) arranged at said container (4) and adapted to detect the presence or lack of a product within said container (4), said sensor means (3, 13) defining at least two sensing locations;
**characterized in that** said sensor means comprises an upper sensor (3) and a lower sensor (13); said upper sensor (3) having a lower sensitivity than said lower sensor (13).

2. The device according to claim 1, **characterized in that** each sensor (3, 13) provides a reading, said readings being compared by an electronic operating board for providing a status information.

3. The device according to claim 2, **characterized in that** said status information is sent to an operator.

4. The device according to claim 1, **characterized in that** said sensor plate (2) is applied externally to said product container at a distance comprised between approximately 1 and 10 mm.

5. The device according to one or more of the preceding claims, **characterized in that** said sensors may be capacitive, piezoelectric, magnetic, or ultrasonic sensors.

6. The device according to one or more of the preceding claims, **characterized in that** it comprises a telemetry system adapted to send the information to a control center and/or to the operator assigned to refilling of said container.

7. The device according to one or more of the preceding claims, **characterized in that** the sensitivity of each sensing location is varied depending on the type of product introduced and on the operating requirements of the storage system.

## Patentansprüche

1. Detektorvorrichtung, insbesondere für Getränkeverkaufsautomaten, umfassend mindestens einen Produktbehälter (4), eine Sensorplatte (2), die ein in dem Behälter (4) angeordnetes Sensormittel (3, 13) stützt und zur Erfassung des Vorhandenseins oder Fehlens eines Produkts in dem Behälter (4) ausgeführt ist, wobei das Sensormittel (3, 13) mindestens zwei Erfassungsstellen definiert;
**dadurch gekennzeichnet, dass** das Sensormittel einen oberen Sensor (3) und einen unteren Sensor (13) umfasst; wobei der obere Sensor (3) eine geringere Empfindlichkeit als der untere Sensor (13) hat.

2. Vorrichtung nach Anspruch 1, **dadurch gekennzeichnet, dass** jeder Sensor (3, 13) einen Messwert bereitstellt, wobei die Messwerte durch ein elektronisches Bedienfeld zur Bereitstellung einer Statusinformation verglichen werden.

3. Vorrichtung nach Anspruch 2, **dadurch gekennzeichnet, dass** die Statusinformation zu einem Bediener gesandt wird.

4. Vorrichtung nach Anspruch 1, **dadurch gekennzeichnet, dass** die Sensorplatte (2) in einem zwischen ca. 1 und 10 mm liegenden Abstand außerhalb des Produktbehälters angebracht ist.

5. Vorrichtung nach einem oder mehreren der vorhergehenden Ansprüche, **dadurch gekennzeichnet, dass** die Sensoren kapazitive, piezoelektrische, magnetische oder Ultraschall-Sensoren sein können.

6. Vorrichtung nach einem oder mehreren der vorhergehenden Ansprüche, **dadurch gekennzeichnet, dass** sie ein Telemetriesystem umfasst, das dazu ausgeführt ist, einer Steuerzentrale und/oder dem zum Nachfüllen des Behälters zugeteilten Bediener die Information zu senden.

7. Vorrichtung nach einem oder mehreren der vorhergehenden Ansprüche, **dadurch gekennzeichnet, dass** die Empfindlichkeit jeder Erfassungsstelle in Abhängigkeit von der Art des eingeführten Produkts und den Betriebsanforderungen des Vorratssystems variabel ist.

## Revendications

1. Dispositif de détection, particulièrement pour des distributeurs automatiques de boissons, comprenant au moins un récipient de produit (4), une plaque de capteurs (2) supportant des moyens formant capteurs (3, 13) agencés au niveau dudit récipient (4) et conçus pour détecter la présence ou l'absence d'un produit dans ledit récipient (4), lesdits moyens formant capteurs (3, 13) définissant au moins deux emplacements de détection ;
**caractérisé en ce que** lesdits moyens formant capteurs comprennent un capteur supérieur (3) et un capteur inférieur (13) ; ledit capteur supérieur (3) ayant une sensibilité plus faible que ledit capteur inférieur (13).

2. Dispositif selon la revendication 1, **caractérisé en ce que** chaque capteur (3, 13) fournit une lecture, lesdites lectures étant comparées par une carte de commande électronique pour fournir des informations d'état.

3. Dispositif selon la revendication 2, **caractérisé en ce que** lesdites informations d'état sont envoyées à un opérateur.

4. Dispositif selon la revendication 1, **caractérisé en ce que** ladite plaque de capteurs (2) est appliquée extérieurement audit récipient de produit à une distance comprise entre environ 1 et 10 mm.

5. Dispositif selon une ou plusieurs des revendications précédentes, **caractérisé en ce que** lesdits capteurs peuvent être des capteurs capacitifs, piézoélectriques, magnétiques ou ultrasonores.

6. Dispositif selon une ou plusieurs des revendications précédentes, **caractérisé en ce qu'**il comprend un système de télémesure conçu pour envoyer les informations à un centre de contrôle et/ou à l'opérateur affecté au réapprovisionnement dudit récipient.

7. Dispositif selon une ou plusieurs des revendications précédentes, **caractérisé en ce que** la sensibilité de chaque emplacement de détection varie en fonction du type de produit introduit et des spécifications de fonctionnement du système de stockage.
